# EUROPEAN PATENT SPECIFICATION

(11) **EP 2 040 070 B1**
(45) Date of publication and mention of the grant of the patent: **02.12.2015**
(21) Application number: 07116664.9
(22) Date of filing: 18.09.2007
(51) Int. Cl.: G01N 29/11, G01N 29/265

(54) **Method and apparatus for the detection of cracks in the teeth of generator rotors**
Verfahren zur Erfassung von Rissen in den Zähnen von Generatorrotoren
Procédé et appareil pour la détection de fissures dans la denture des rotors de générateur

(43) Date of publication of application: 25.03.2009
(73) Proprietor: ALSTOM Technology Ltd, 5400 Baden (CH)
(72) Inventor: Knowles, James, Cheshire WA3 3PE (GB); Moser, Roland, Dr., 8005 Zürich (CH)
(74) Representative: Alstom Technology Ltd

(56) References cited:
- EP-A- 1 777 513
- WO-A-00/05120
- US-A- 3 962 908
- US-A- 4 457 176

## Description

### FIELD OF THE INVENTION

The present invention generally relates to high power electrical generators. It relates especially to a method and apparatus for the detection of cracks in the teeth of generator rotors.

### BACKGROUND OF THE INVENTION

Generator rotors are manufactured from forged steel and these are machined with radial slots along the length of the body of the shaft. These radial slots take the conductors for the field windings to produce a desired magnetic field for power generation. In such a convention the field windings are restrained within the slot by a wedge. These slot wedges are generally a dovetail arrangement but may vary in design depending on the rotor design. The copper conductor pack is held in place by the slot wedge while the rotor is rotating.

Rotor teeth cracks due to fretting between steel wedges and the rotor during low speed barring (loose wedge) have been reported in the past. These flaws seem to appear quite often, so that NDT (Non Destructive Testing) solutions have been developed that allow for the detection and sizing of these cracks.

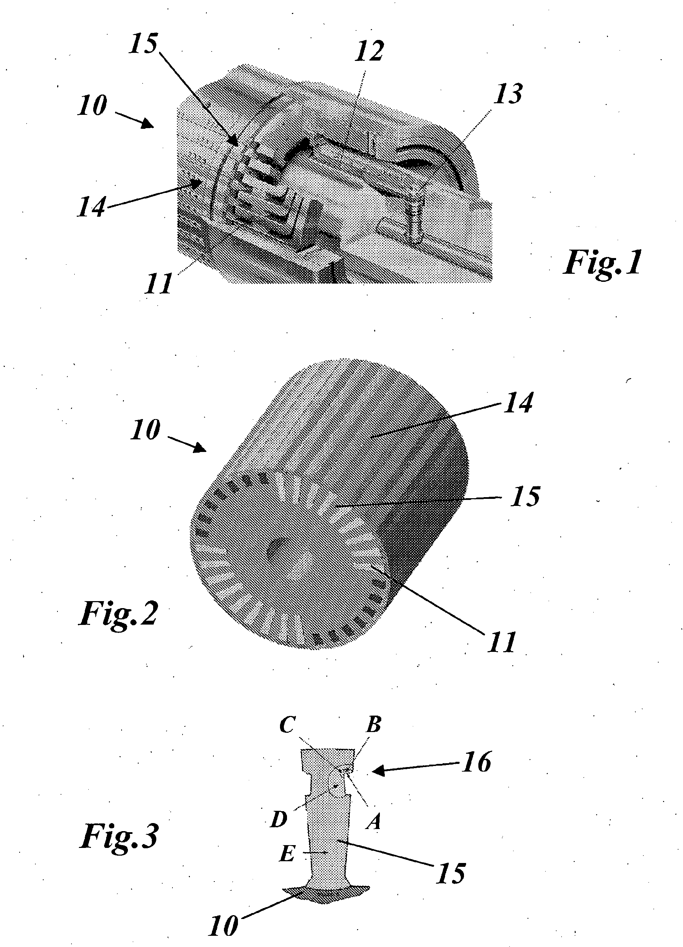

Figs. 1 to 3 depict the problem: The rotor 10 of a high power electrical generator comprises at its outer circumference a plurality of axial teeth 15, which are separated by winding slots. The winding slots receive a winding 11, which is fixed within the slot by means of a wedge 14. The winding 11 is connected by means of a field lead 12 and a respective connector 13. As can be seen in Fig. 3, there is a crack zone 16 at the edge of the tooth 15, where the tooth interacts with the wedge 14. In a first stage A, there is a fretting initiation at this edge, which results in a crack, which grows initially in a second stage B. In a third stage C the crack grows around the radius of the edge to include the whole T-slot in a fourth stage D. Finally, the crack grows into the body of the rotor 10 in a fifth stage E.

Most of the solutions proposed so far detect the cracks with the wedge 14 and the winding 11 removed. The removal of wedges and windings is very costly and time-consuming.

One document (EP-A1-1 777 513) proposes a solution that allows for detection on the assembled rotor, using a phased array ultrasonic technology. Fig. 4 reproduces Fig. 9 of this document: Here, a phased array 17 of ultrasonic transducers is used to generate a scanning beam for inspection of the crack zone 16 within the tooth 15' of a rotor 10'.

However, using a phased array requires sophisticated electronic equipment for defining and changing the beam direction and extracting the useful data from the signals received by the phased array.

US-A-4,457,176 discloses a process and a device for the nondestructive testing of the material of generator rotor teeth using a probe arrangement including a transmit probe, a reference probe, and a defect detection probe. The probes are arranged on a support plate in such a manner as to be movably attached, and are adjusted to the flank angles and crest angles and thus also to the width of the rotor teethby being rotated out laterally. The necessity for such an adjustment reduces the flexibility and ease of application.

### DESCRIPTION OF THE INVENTION

It is therefore an objective of the invention, to provide a method and apparatus for the detection of cracks in the teeth of generator rotors, which have a simple measuring configuration, are easy to use, and use simple methods for collecting and processing the data.

This objective is achieved by a method and apparatus according to claim 1 and claim 10, respectively.

The method according to the invention comprises the steps of: providing a plurality of ultrasonic pulse echo transducers being arranged in an array, and being positioned and aligned in such a way as to provide a range of different inspection angles for the tooth geometry, positioning the array on top of the rotor tooth, exciting the various ultrasonic pulse echo transducers of said array sequentially to produce a transmission beam for the interrogation of wedge angle on the underside of the tooth, and conditioning the acquired data from said at least one of said plurality of ultrasonic pulse echo transducers to capture reflection from the flaws within the tooth.

According to one embodiment of the invention the conditioned acquired data is displayed on a display.

According to another embodiment of the invention the tooth is fully inspected by moving the array of ultrasonic pulse echo transducers along the entity of the tooth in the direction of the rotor axis.

According to another embodiment of the invention the array of ultrasonic pulse echo transducers is aligned to the axial direction of the rotor tooth.

According to another embodiment of the invention the array of ultrasonic pulse echo transducers is coupled to the tooth face with a coupling medium.

According to another embodiment of the invention the array of ultrasonic pulse echo transducers is moved along the upper surface of the rotor tooth by means of a semiautomatic or fully automatic device, especially a robot.

According to another embodiment of the invention the device for moving the pulse-echo transducer array carries an electronic encoder, which in combination with a sequential excitation of each transducer within the array, allows for data acquisition throughout the whole length of the rotor tooth.

According to another embodiment of the invention the array of ultrasonic pulse echo transducers is rotated to allow inspection of the opposite side of the tooth.

According to another embodiment of the invention two arrays of ultrasonic pulse echo transducers are positioned and moved in unity along the length of the tooth as to provide full inspection of each tooth in one turn.

The apparatus according to the invention comprises: a plurality of ultrasonic pulse echo transducers being arranged in an array, and being positioned and aligned in such a way as to provide a range of different inspection angles for the tooth geometry, and a data unit for conditioning data acquired from said plurality of ultrasonic pulse echo transducers, said data unit being connected to said array of ultrasonic pulse echo transducers, whereby each ultrasonic pulse echo transducer has its own transducer wedge and acoustic coupling face and is arranged to provide both transmission and reception at a different predetermined angle.

According to one embodiment of the invention said plurality of ultrasonic pulse echo transducers is mounted in one housing.

According to another embodiment of the invention a device is provided, that carries the pulse-echo transducer array along the upper surface of the rotor tooth.

According to another embodiment of the invention said device is a semiautomatic or fully automatic device, especially a robot.

According to another embodiment of the invention said device carries an electronic encoder.

### BRIEF DESCRIPTION OF THE DRAWINGS

The subject matter of the invention will be explained in more detail in the following text with reference to preferred exemplary embodiments, which are illustrated in the attached drawings, in which:
- Fig. 1 :: shows a typical rotor of a high power electrical generator;
- Fig. 2 :: shows a simplified drawing of the rotor;
- Fig. 3 :: shows the crack propagation in the tooth of a rotor according to Fig. 1 or 2;
- Fig. 4 :: reproduces Fig. 9 of a prior art document ( EP-A1-1 777 513 );
- Fig. 5 :: shows a perspective view of an embodiment of the detection system according to the invention;
- Fig. 6: shows an embodiment of the pulse echo array according to the invention;
- Fig. 7: shows an actual measuring system according to the invention on a model tooth; and
- Fig. 8: shows a data unit of a measuring system according to the invention displaying a measuring curve, which shows the presence of a crack.

### DETAILED DESCRIPTION OF PREFERRED EMBODIMENTS

The present invention disclosure describes a novel ultrasonic approach that takes advantage of the simpler and compacter ultrasonic pulse-echo technology compared to the phased array approach of the prior art (EP-A1-1 777 513).

The new approach is not only capable of detection fretting cracks inside the assembled rotor, but is proven compact enough for in-situ measurement, i.e. it fits into the confined space of the air-gap between rotor and stator, hence allowing for a condition assessment of generator rotors without even removing the rotor from the stator.

The new method and apparatus can be easily applied in combination with existing deployment robots and mechanisms.

The new method and apparatus is especially capable of preventing fatal failure due to age related cracking.

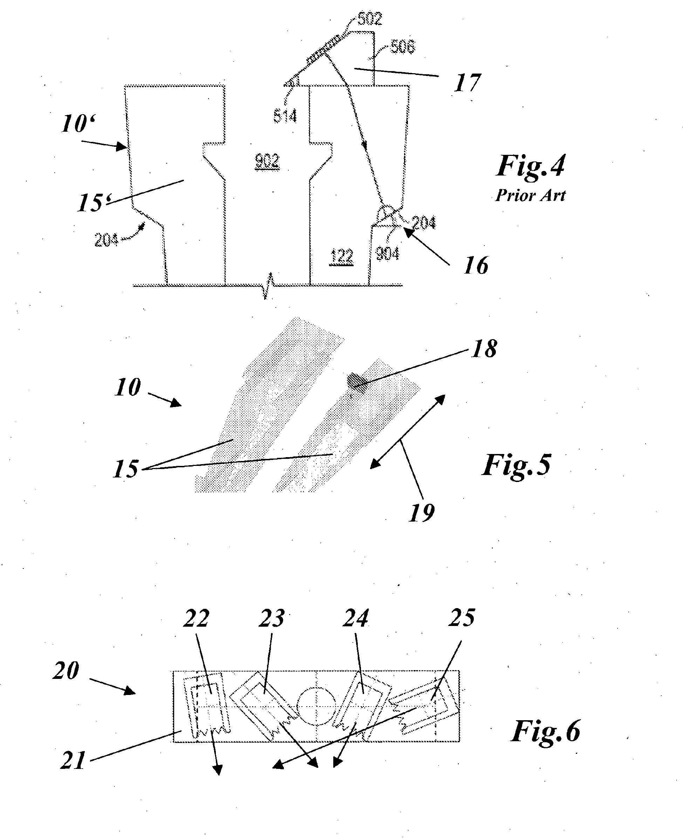

The proposed system for inspecting generator rotors includes a pulse echo ultrasound transducer array (see 18 in Fig. 5), that provides a range of active elements with specific angles so arranged to best provide the inspection of the wedge angle face.

As can be seen in Fig. 6, the sensor array or system 20 includes a number of ultrasonic transducers 22,..,25 mounted in one housing (array) or body 21 of e.g. bulk acrylic. Each of the ultrasonic transducers 22,..,25 is configured with specific beam angles (see arrows in Fig. 6) and to be excited in a sequence to produce a transmission beam for the interrogation of the wedge angle on the underside of the tooth 15. The sensor array 20 carries a number of transducers 22,..,25 (four in the embodiment of Fig. 6) positioned and aligned in such a way as to best provide a range of inspection angles for the tooth geometry. The pulse echo transducers 22,..,25 are so arranged as to best transmit and capture any reflections from cracks.

Each transducer element 22,..,25 has its own transducer wedge and acoustic coupling face and is arranged to provide both transmission and reception at a predetermined angle. Fig. 5 shows the placement of the pulse-echo sensor array 18 and the inspection zone below.

The array 18 or 20 is positioned on top of the rotor tooth 15 and aligned to the axial direction of the rotor tooth 15, being coupled to the tooth face with a suitable coupling medium. One tooth 15 is fully inspected by moving the pulse-echo array 18 or 20 along the entity of the tooth 15 in the direction of the rotor axis (scan direction 19 in Fig. 5).

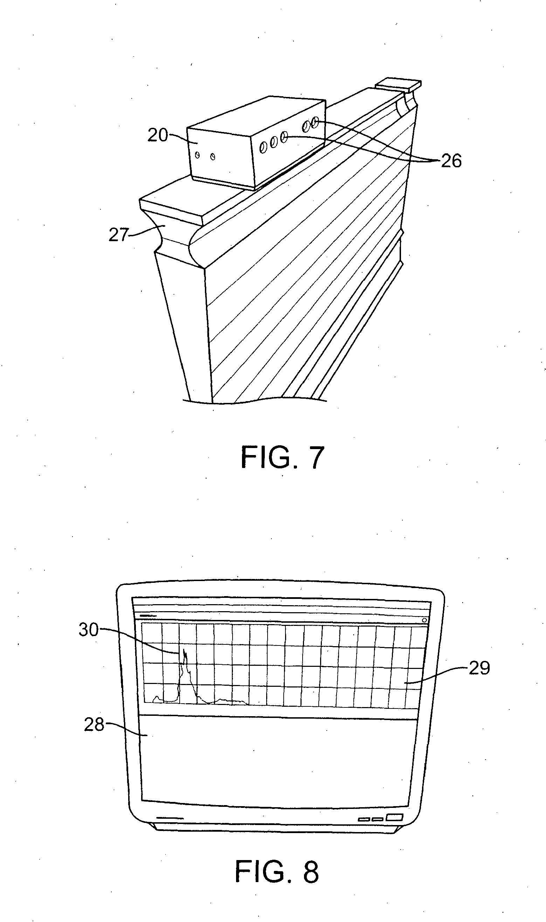

The device, that carries the pulse-echo transducer array 18 or 20 along the upper surface of the rotor tooth 15, can be a manually, semiautomatic or fully automatic device (i.e. a robot), carrying an electronic encoder. Such an encoder, in combination with a sequential excitation of each transducer 22,..,25 within the array 18 or 20, allows for data acquisition throughout the whole length of the rotor teeth 15. The acquired data is conditioned by a data unit 28 (Fig. 8), which is connected to the array 20 by means of connectors 26 (Fig. 7), to capture reflection from the flaws. The resulting curve is displayed on a display 29 to show a crack indicating peak 30. The array 20 can be tested and calibrated by means of a model tooth 27, which contains artificial cracks.

The array 18 or 20 can be rotated to allow inspection of the opposite side of the tooth 15, or two such devices can be positioned and moved in unity along the length of the tooth 15 as to provide full inspection of each tooth 15 in one turn.

Each of the transducers 22,..,25 can be excited individually or in a sequence to perform data acquisition whilst stationary or dynamically.

Summed up, the invention is characterized by:
- An arrangement of pulse echo transducers arranged at specific angles for the interrogation of wedge angles.
- A transducer array having individual transceivers so arranged for the detection of fretting cracking.
- The ultrasonic beam angles enter the material at predetermined paths and beam angles through the top surface of the rotor tooth.
- Acoustic coupling face profiled to suit each rotor design and diameter.

### LIST OF REFERENCE NUMERALS

- 10,10': rotor
- 11: winding
- 12: field lead
- 13: connector
- 14: wedge
- 15,15': tooth
- 16: crack zone
- 17: phased array
- 18,20: sensor array (pulse echo)
- 19: scan direction
- 21: body (e.g. acrylic)
- 22,..,25: ultrasonic transducer
- 26: connector
- 27: model tooth
- 28: data unit
- 29: display
- 30: crack indicating peak
- A,..,E: crack growth propagation stage

## Claims

1. Method for non-destructive testing the teeth of a high power electrical generator rotor (10), comprising the steps of:
providing a plurality of ultrasonic pulse echo transducers (22,..,25) being arranged in an array (18, 20), and being positioned and aligned in such a way as to provide a range of different inspection angles for the tooth geometry;
positioning the array (18, 20) on top of the rotor tooth (15);
exciting the various ultrasonic pulse echo transducers (22,..,25) of said array (18, 20) sequentially to produce a transmission beam for the interrogation of wedge angle on the underside of the tooth; and
conditioning the acquired data from said at least one of said plurality of ultrasonic pulse echo transducers (22,..,25) to capture reflection from the flaws within the tooth (15).

2. The method as claimed in claim 1, wherein the conditioned acquired data is displayed on a display (29).

3. The method as claimed in claim 1 or 2, wherein the tooth (15) is fully inspected by moving the array (18, 20) of ultrasonic pulse echo transducers (22,..,25) along the entity of the tooth (15) in the direction of the rotor axis.

4. The method as claimed in claim 1, wherein the array (18, 20) of ultrasonic pulse echo transducers (22,..,25) is aligned to the axial direction of the rotor tooth (15).

5. The method as claimed in claim 1, wherein the array (18, 20) of ultrasonic pulse echo transducers (22,..,25) is coupled to the tooth face with a coupling medium.

6. The method as claimed in claim 3, wherein the array (18, 20) of ultrasonic pulse echo transducers (22,..,25) is moved along the upper surface of the rotor tooth (15) by means of a semiautomatic or fully automatic device, especially a robot.

7. The method as claimed in claim 6, wherein the device for moving the pulse-echo transducer array (18, 20) carries an electronic encoder, which in combination with a sequential excitation of each transducer (22,..,25) within the array (18, 20), allows for data acquisition throughout the whole length of the rotor tooth (15).

8. The method as claimed in claim 1, wherein the array (18, 20) of ultrasonic pulse echo transducers (22,..,25) is rotated to allow inspection of the opposite side of the tooth (15).

9. The method as claimed in claim 1, wherein two arrays (18, 20) of ultrasonic pulse echo transducers (22,..,25) are positioned and moved in unity along the length of the tooth (15) as to provide full inspection of each tooth (15) in one turn.

10. An apparatus for the non-destructive testing the teeth of a high power electrical generator rotor (10) in accordance with the method claimed in claim 1, comprising
a plurality of ultrasonic pulse echo transducers (22,..,25) being arranged in an array (18, 20), and being positioned and aligned in such a way as to provide a range of different inspection angles for the tooth geometry; and
a data unit (28) for conditioning data acquired from said plurality of ultrasonic pulse echo transducers (22,..,25), said data unit (28) being connected to said array (18, 20) of ultrasonic pulse echo transducers (22,..,25),
wherein each ultrasonic pulse echo transducer (22,..,25) has its own transducer wedge and acoustic coupling face and is arranged to provide both transmission and reception at a different predetermined angle.

11. The apparatus as claimed in claim 10, wherein said plurality of ultrasonic pulse echo transducers (22,..,25) is mounted in one housing (21).

12. The apparatus as claimed in claim 10, further comprising a device that carries the pulse-echo transducer array (18, 20) along the upper surface of the rotor tooth.

13. The apparatus as claimed in claim 12, wherein said device is a semiautomatic or fully automatic device, especially a robot.

14. The apparatus as claimed in claim 13, wherein said device carries an electronic encoder.

## Patentansprüche

1. Verfahren zur zerstörungsfreien Prüfung der Zähne eines Hochleistungs-Stromgeneratorrotors (10), umfassend die folgenden Schritte:
Bereitstellen einer Mehrzahl von Ultraschall-Impulsechowandlern (22, ..., 25), die in einer Gruppe (18, 20) angeordnet sind und derart positioniert und ausgerichtet werden, dass sie einen Bereich von verschiedenen Prüfwinkeln für die Zahngeometrie bereitstellen;
Positionieren der Gruppe (18, 20) am oberen Ende des Rotorzahns (15);
sequenzielles Erregen der verschiedenen Ultraschall-Impulsechowandler (22, ..., 25) der Gruppe (18, 20), um einen Übertragungsstrahl für die Messung des Keilwinkels auf der Unterseite des Zahns zu erzeugen; und
Verarbeiten der erfassten Daten von dem mindestens einen der Mehrzahl von Ultraschall-Impulsechowandlern (22, ..., 25), um Reflexionen von Fehlern innerhalb des Zahns (15) zu erfassen.

2. Verfahren nach Anspruch 1, wobei die aufbereiteten erfassten Daten auf einer Anzeige (29) angezeigt werden.

3. Verfahren nach Anspruch 1 oder 2, wobei der Zahn (15) durch Bewegen der Gruppe (18, 20) von Ultraschall-Impulsechowandlern (22, ..., 25) entlang der Gesamtheit des Zahns (15) in der Richtung der Rotorachse vollständig geprüft wird.

4. Verfahren nach Anspruch 1, wobei die Gruppe (18, 20) von Ultraschall-Impulsechowandlern (22, ..., 25) in der axialen Richtung des Rotorzahns (15) ausgerichtet wird.

5. Verfahren nach Anspruch 1, wobei die Gruppe (18, 20) von Ultraschall-Impulsechowandlern (22, ..., 25) mit einem Koppelmedium mit der Zahnfläche gekoppelt wird.

6. Verfahren nach Anspruch 3, wobei die Gruppe (18, 20) von Ultraschall-Impulsechowandlern (22, ..., 25) mittels einer halb- oder vollautomatischen Einrichtung, insbesondere eines Roboters, die Oberseite des Rotorzahns (15) entlang bewegt wird.

7. Verfahren nach Anspruch 6, wobei die Vorrichtung zum Bewegen der Impulsechowandlergruppe (18, 20) einen elektronischen Codierer trägt, der in Kombination mit einer sequenziellen Erregung jedes Wandlers (22, ..., 25) innerhalb der Gruppe (18, 20) die Datenerfassung entlang der gesamten Länge des Rotorzahns (15) ermöglicht.

8. Verfahren nach Anspruch 1, wobei die Gruppe (18, 20) von Ultraschall-Impulsechowandlern (22, ..., 25) gedreht wird, um die Prüfung der gegenüberliegenden Seite des Zahns (15) zu ermöglichen.

9. Verfahren nach Anspruch 1, wobei zwei Gruppen (18, 20) von Ultraschall-Impulsechowandlern (22, ..., 25) gemeinsam entlang der Länge des Zahns (15) positioniert und bewegt werden, um eine vollständige Prüfung jedes Zahns (15) in einem Durchlauf bereitzustellen.

10. Vorrichtung zur zerstörungsfreien Prüfung der Zähne eines Hochleistungs-Stromgeneratorrotors (10) gemäß dem Verfahren nach Anspruch 1, umfassend
eine Mehrzahl von Ultraschall-Impulsechowandlern (22, ..., 25), die in einer Gruppe (18, 20) angeordnet und derart positioniert und ausgerichtet sind, dass sie einen Bereich von verschiedenen Prüfwinkeln für die Zahngeometrie bereitstellen; und
eine Dateneinheit (28) zum Aufbereiten von Daten, die von der Mehrzahl von Ultraschall-Impulsechowandlern (22, ..., 25) gesammelt werden, wobei die Dateneinheit (28) mit der Gruppe (18, 20) von Ultraschall-impulsechowandlern (22, ..., 25) verbunden ist,
wobei jeder Ultraschall-Impulsechowandler (22, ..., 25) seinen eigenen Wandlerkeil und seine eigene akustische Koppelfläche aufweist und so ausgelegt ist, dass er sowohl Senden als auch Empfang in einem unterschiedlichen vorbestimmten Winkel bereitstellt.

11. Vorrichtung nach Anspruch 10, wobei die Mehrzahl von Ultraschall-Impulsechowandlern (22, ..., 25) in einem Gehäuse (21) montiert ist.

12. Vorrichtung nach Anspruch 10, ferner umfassend eine Einrichtung, welche die Impulsechowandlergruppe (18, 20) entlang der Oberseite des Rotorzahns trägt.

13. Vorrichtung nach Anspruch 12, wobei die Einrichtung eine halb- oder vollautomatische Einrichtung, insbesondere ein Roboter, ist.

14. Vorrichtung nach Anspruch 13, wobei die Einrichtung einen elektronischen Codierer aufweist.

## Revendications

1. Procédé de test non destructif de la denture d'un rotor de générateur électrique de forte puissance (10), comprenant les étapes consistant à :
fournir une pluralité de transducteurs à échos impulsionnels ultrasonores (22, ..., 25) qui sont agencés en un réseau (18, 20) et qui sont positionnés et alignés de manière à fournir une gamme d'angles d'inspection différents pour la géométrie de la denture ;
positionner le réseau (18, 20) sur le dessus de la denture de rotor (15) ;
exciter séquentiellement les divers transducteurs à échos impulsionnels ultrasonores (22, ..., 25) dudit réseau (18, 20) afin de produire un faisceau de transmission pour l'interrogation de l'angle de coin sur la face inférieure de la denture ; et
conditionner les données acquises en provenance dudit au moins un de ladite pluralité de transducteurs à échos impulsionnels ultrasonores (22, ..., 25) afin d'acquérir une réflexion provenant des défauts au sein de la denture (15).

2. Procédé selon la revendication 1, dans lequel les données acquises conditionnées sont affichées sur un afficheur (29).

3. Procédé selon la revendication 1 ou 2, dans lequel la denture (15) est entièrement inspectée par déplacement du réseau (18, 20) de transducteurs à échos impulsionnels ultrasonores (22, ..., 25) le long de la totalité de la denture (15) dans la direction de l'axe du rotor.

4. Procédé selon la revendication 1, dans lequel le réseau (18, 20) de transducteurs à échos impulsionnels ultrasonores (22, ..., 25) est aligné suivant la direction axiale de la denture de rotor (15).

5. Procédé selon la revendication 1, dans lequel le réseau (18, 20) de transducteurs à échos impulsionnels ultrasonores (22, ..., 25) est couplé à la face de la denture par l'intermédiaire d'un milieu de couplage.

6. Procédé selon la revendication 3, dans lequel le réseau (18, 20) de transducteurs à échos impulsionnels ultrasonores (22, ..., 25) est déplacé le long de la surface supérieure de la denture de rotor (15) au moyen d'un dispositif semi-automatique ou entièrement automatique, notamment un robot.

7. Procédé selon la revendication 6, dans lequel le dispositif destiné à déplacer le réseau de transducteurs à échos impulsionnels (18, 20) porte un codeur électronique qui, en association avec une excitation séquentielle de chaque transducteur (22, ..., 25) au sein du réseau (18, 20), permet d'acquérir des données sur toute la longueur de la denture de rotor (15).

8. Procédé selon la revendication 1, dans lequel le réseau (18, 20) de transducteurs à échos impulsionnels ultrasonores (22, ..., 25) est mis en rotation pour permettre une inspection de la face opposée de la denture (15).

9. Procédé selon la revendication 1, dans lequel deux réseaux (18, 20) de transducteurs à échos impulsionnels ultrasonores (22, ..., 25) sont positionnés et déplacés de manière solidaire le long de la longueur de la denture (15) pour permettre une inspection complète de chaque denture (15) en un tour.

10. Appareil destiné au test non destructif de la denture d'un rotor de générateur électrique de forte puissance (10) conformément au procédé selon la revendication 1, comprenant :
une pluralité de transducteurs à échos impulsionnels ultrasonores (22, ..., 25) qui sont agencés en un réseau (18, 20) et qui sont positionnés et alignés de manière à fournir une gamme d'angles d'inspection différents pour la géométrie de la denture ; et
une unité de données (28) destinée à conditionner les données acquises en provenance de ladite pluralité de transducteurs à échos impulsionnels ultrasonores (22, ..., 25), ladite unité de données (28) étant connectée audit réseau (18, 20) de transducteurs à échos impulsionnels ultrasonores (22, ..., 25),
dans lequel chaque transducteur à échos impulsionnels ultrasonores (22,..., 25) comporte son propre coin transducteur et sa propre face de couplage acoustique et est agencé de manière à permettre à la fois l'émission et la réception sous un angle prédéterminé différent.

11. Appareil selon la revendication 10, dans lequel ladite pluralité de transducteurs à échos impulsionnels ultrasonores (22,..., 25) est montée dans un boîtier (21).

12. Appareil selon la revendication 10, comprenant en outre un dispositif qui porte le réseau de transducteurs à échos impulsionnels (18, 20) le long de la surface supérieure de la denture de rotor.

13. Appareil selon la revendication 12, dans lequel ledit dispositif est un dispositif semi-automatique ou entièrement automatique, notamment un robot.

14. Appareil selon la revendication 13, dans lequel ledit dispositif porte un codeur électronique.
